# EUROPÄISCHE PATENTANMELDUNG

(11) **EP 1 260 921 A1**
(43) Veröffentlichungstag der Anmeldung: **27.11.2002**
(21) Anmeldenummer: 01112581.2
(22) Anmeldetag: 23.05.2001
(51) Int. Cl.: G06F 17/60

(54) **Vorrichtung zum verschliessbaren Aufbewahren von Gegenständen und Verfahren zum Kaufen von Gegenständen**

(71) Anmelder: SIEMENS AKTIENGESELLSCHAFT, 80333 München (DE)
(72) Erfinder: Granzer, Hermann, Dr., 82343 Poecking (DE)

(57) **Zusammenfassung**

Die Erfindung betrifft eine Vorrichtung (SCF) zum verschließbaren Aufbewahren von Gegenständen, welche eine Einrichtung zum Überprüfen einer Öffnungsberechtigung aufweist, weiters dazu eingerichtet ist, ein Öffnen nur nach erfolgter, positiver Authentifizierung eines Benutzers zu ermöglichen, und welcher eine Kontoeinrichtung (KON) zugeordnet ist, welcher zumindest ein Guthaben entsprechend dem Wert der aufbewahrten Gegenstände gutschreibbar ist. Außerdem betrifft die Erfindung ein Verfahren zum Kaufen von Gegenständen unter Verwendung einer solchen Vorrichtung (SCF) zum Aufbewahren von Gegenständen.

## Beschreibung

Vorrichtung zum verschließbaren Aufbewahren von Gegenständen und Verfahren zum Kaufen von Gegenständen

Die Erfindung betrifft eine Vorrichtung zum verschließbaren Aufbewahren von Gegenständen.

Weiters betrifft die Erfindung ein Verfahren zum Kaufen von Gegenständen, insbesondere zum elektronischen Kaufen von Gegenständen, die über einen elektronischen Kaufplatz auswählbar sind.

Mit der zunehmenden Verbreitung des Internet und der großen Anzahl von Benutzern ist bei vielen Firmen etc. auch das Interesse an einem Verkaufen von Produkten, Dienstleitungen etc. über das Internet gewachsen. Diesem sogenannten "e-commerce" wurden und werden immer wieder enorme Zuwachszahlen vorausgesagt, dennoch sieht die Realität dermaßen aus, dass die Möglichkeit des e-commerce von vielen Firmen nur ungern oder gar nicht angeboten wird und auch für viele Benutzer die Hemmschwelle oftmals sehr groß ist für einen Bestellung von Waren über das Internet.

Momentan leidet die Entwicklung des e-commerce an mehreren Punkten. Die Bezahlung der Waren muss gewährleistet werden. Eine einfache Möglichkeit dafür, nämlich der Kreditkartenkauf, wird von den Benutzern nicht gerne verwendet, da dieser für viele zu unsicher ist und die Kreditkartendaten leicht bei dem Übertragungsvorgang im Internet von nicht Berechtigten ausgeforscht werden können. Lastschriftverfahren bergen eine Unsicherheit für den Verkäufer, da der Käufer leicht das Geld wieder rückbuchen kann oder auch das Konto nicht gedeckt sein kann.

Abgesehen von Produkten, die über das Internet verschickt werden können, wie etwa Software, ist es außerdem notwendig, die bestellten Produkte dem Käufer zuzustellen. Dies bringt für den Anbieter wiederum zusätzliche Kosten mit sich, da für den Versand eine gewisse Logistik notwendig ist, Versandkosten anfallen und außerdem weitere Kosten für zusätzliches Personal entstehen.

Beispielsweise ist es von größeren Lebensmittelketten bekannt, dass man bei diesen über das Internet Waren bestellen kann, die dann innerhalb eines bestimmten Zeitraumes, zumeist 24 Stunden, zugestellt werden. Dabei fallen dann neben den Personalkosten für den Verkäufer auch noch Fahrzeugkosten an, die in der Regel auf den Käufer abgewälzt werden, sodass erst Bestellungen ab einer gewissen, zumeist relativ hohen Summe für diesen interessant werden.

Weiters ist an dem oben genannten Beispiel nachteilig, dass sich diese Art des Versandes etwa für leicht verderbliche Ware in Folge der langen Auslieferungszeit nicht oder nur selten eignet.

Grundsätzlich kann argumentiert werden, dass insbesondere für Waren des täglichen Gebrauchs, wie etwa Lebensmittel, oben beschriebene Bestellung und Zustellung bis auf wenige Ausnahmen, wie etwa ältere oder körperlich beeinträchtigte Personen, nicht unbedingt notwendig ist. Allerdings wäre es für viele Personen, etwa berufstätige Menschen günstig, wenn Waren auf einfache Weise, beispielsweise telefonisch oder noch besser über das Internet, e-mail, SMS oder WAP-Dienste etc. geordert und dann zu einem für den Käufer günstigen Zeitpunkt entgegengenommen werden können.

Für den Bestellvorgang muss der Anbieter dazu nur über ein entsprechendes Angebot zum Bestellen der Waren, beispielsweise einen sogenannten "elektronischen Shop" verfügen, sodass der Interessent die entsprechenden Waren ordern kann. Allerdings ist bisher noch kein Weg bekannt, wie die Übergabe der Waren erfolgen soll, ohne dass die oben genannten Probleme, etwa betreffend Bezahlung, Unkosten für Zustellung, lange Dauer etc. zum Tragen kommen.

Es ist eine Aufgabe der Erfindung, Wege und Mittel aufzuzeigen, mit denen eine Übergabe von Waren ohne die oben genannten Nachteile erfolgen kann.

Diese Aufgabe wird mit einer eingangs erwähnten Vorrichtung dadurch gelöst, dass sie erfindungsgemäß
- eine Einrichtung zum Überprüfen einer Öffnungsberechtigung aufweist,
- dass sie weiters dazu eingerichtet ist, ein Öffnen nur nach erfolgter, positiver Authentifizierung eines Benutzers zu ermöglichen, und
- dass ihr eine Kontoeinrichtung zugeordnet ist, welcher zumindest ein Guthaben entsprechend dem Wert der aufbewahrten Gegenstände gutschreibbar ist.

Mit der erfindungsgemäßen Vorrichtung wird es möglich, dass von Verkäuferseite bei diesem georderte Waren in der Vorrichtung verschlossen werden. Ein Öffnen der Vorrichtung ist dann nur von einer dazu autorisierten Person möglich, wozu sich diese gegenüber der Vorrichtung identifizieren muss. Außerdem wird von der Vorrichtung auch die "Abrechnung" der Kosten für die bestellten Waren durchgeführt, und eine Entnahme der Gegenstände bzw. ein Öffnen der Vorrichtung ist nur dann möglich, wenn auch diese Bezahlung durchgeführt werden kann bzw. ein entsprechendes Konto des Käufers gedeckt ist.

Mit der Erfindung, die sich insbesondere für den Vertrieb von verderblichen Waren eignet, wie etwa Lebensmitteln, entstehen sowohl für den Käufer als auch für den Verkäufer Vorteile. Der Käufer kann die Waren komfortabel und einfach bestellen, und es nicht notwendig, sich etwa längere Zeit in einem entsprechenden Geschäft aufzuhalten, die Waren zu suchen und sich beispielsweise an der Frischwarenabteilung oder der Kassa längere Zeit zu gedulden. Die Waren können zu einem für ihn günstigen Zeitpunkt abgeholt werden. Bei der Bezahlung existieren keine Unsicherheitsfaktoren mehr, da diese nicht etwa mit einer Kreditkarte erfolgt, sondern unmittelbar bei der Entnahme der Waren aus der Vorrichtung.

Für den Verkäufer entfallen die Kosten für den Versand, er kann ein bestelltes Warensortiment beispielsweise zu einem Zeitpunkt zusammenstellen, wo in seinem Geschäft eine nur geringe Kundenfrequenz herrscht, und außerdem sind auch für den Verkäufer die Unsicherheiten betreffend die Bezahlung ausgeräumt.

Zweckmäßig ist es dabei, wenn die erfindungsgemäße Vorrichtung so eingerichtet ist, dass ein Öffnen erst nach einem Gutschreiben des Guthabens möglich ist bzw. dass sie dazu eingerichtet ist, das Guthaben im Moment des Öffnens gutzuschreiben. Auf diese Weise ist für den Verkäufer eine maximale Sicherheit gewährleistet, da die Ware für einen Käufer nur zugänglich wird, wenn er diese auch tatsächlich bezahlt.

Von Vorteil ist es, wenn die Kontoeinrichtung getrennt von der Vorrichtung ausgebildet und mit dieser über eine Datenleitung verbunden ist, wodurch eine hohe Flexibilität der Erfindung gegeben ist und eine Kontoeinrichtung mit mehreren erfindungsgemäßen Vorrichtungen gemeinsam verwendbar ist.

Beispielsweise enthält bei einer Ausführungsform der Erfindung die Kontoeinrichtung zumindest eine Händler-Speicherkarte, welcher das Guthaben gutgeschrieben wird, bzw. ist die Kontoeinrichtung im wesentlichen eine Händler-Speicherkarte. Bei dieser Ausführungsform ist es einem Käufer möglich, die Bezahlung mit einer Bankomat- bzw. EC-Karte durchzuführen. Das Konto des Käufers wird mit einem entsprechenden Betrag belastet, und der Betrag wird der Händler-Speicherkarte gutgeschrieben. Diesen Betrag kann sich der Händler dann - meist in regelmäßigen Abständen - einem bei einem Bankinstitut geführten Konto gutschreiben lassen.

Für die Bezahlungs- und/oder Authentifizierungsvorgänge gegenüber der Vorrichtung ist es von Vorteil, wenn die Vorrichtung zumindest eine Leseeinrichtung für Kunden-Speicherkarten aufweist. Mit dieser Kundenkarte kann dann die Bezahlung und/oder Authentifizierung erfolgen.

Für Bezahlungsvorgänge ist es dabei von Vorteil, wenn die Leseeinrichtung mit der Kontoeinrichtung verbindbar ist, und das Gutschreiben des Warenwertes unter Verwendung der Speicherkarte erfolgt.

Zusätzlich kann auf diese Weise auch noch eine Überprüfung der Öffnungsberechtigung an Hand der Speicherkarte erfolgen. Wenn es sich bei der Speicherkarte beispielsweise um eine Bankomat-Karte (EC-Karte) handelt, kann eine Bezahlung erst dann erfolgen, wenn der Benutzer dieser Karte einen entsprechenden, der Karte zugeordneten Code eingegeben hat und dieser überprüft wurde. Entsprechend kann diese Vorgangsweise zur Authentifizierung gegenüber der erfindungsgemäßen Vorrichtung verwendet werden, indem die Öffnungsberechtigung für die Vorrichtung mit der Speicherkarte verknüpft wird, sodass ein Öffnen nur für den "Inhaber" einer bestimmten Speicherkarte möglich ist.

Für die Eingabe eines einer Speicherkarte zugeordneten Codes ist es von Vorteil, wenn die Vorrichtung zumindest eine Eingabeeinheit aufweist.

Besonders zweckmäßig ist es in diesem Zusammenhang, wenn die erfindungsgemäße Vorrichtung auch dazu eingerichtet ist, eine über die Eingabeeinheit eingegebene Kennung mit einer auf der Speicherkarte abgespeicherten Kennung (PIN-Code, Passwort) zu vergleichen.

Damit kann die Authentifizierung über beispielsweise den PIN-Code oder ein Passwort, welches der Speicherkarte zugeordnet ist, stattfinden. Üblicherweise ist die Situation aber so, dass die Authentifizierung wie beispielsweise bei EC-Karten üblich über einen Algorithmus erfolgt, und der PIN-Code vor allem als Schutz vor der missbräuchlichen Verwendung der Speicherkarte durch nicht berechtigte Dritte dient.

Bei einer besonders vorteilhaften Ausführungsform der Erfindung ist der Vorrichtung zumindest eine Speichereinrichtung zugeordnet, in welcher Informationen hinsichtlich der Zugangsberechtigung von Benutzern ablegbar sind. Werden in einer erfindungsgemäßen Vorrichtung für einen Käufer bestimmte Waren untergebracht und versperrt, so ist es von Wichtigkeit, dass nur dieser Käufer - bzw. eine von ihm dazu autorisierte Person - die Waren entnehmen kann. Dazu wird der Käufer beispielsweise unmittelbar nach dem Bestellvorgang der Waren mit einem Code versorgt, den er dann an der für Vorrichtung, welche die für ihn bestimmten Waren enthält, eingeben muss. Dieser Code muss natürlich auch der Vorrichtung "bekannt" sein, wozu dieser gemäß dieser vorteilhaften Ausführungsform der Erfindung in einem der Vorrichtung zugeordneten Speicher abgelegt wird.

Damit ein unmittelbares Vergleichen des über die Eingabeeinheit eingegebenen Codes mit dem abgespeicherten Code möglich ist, ist es günstig, wenn die Speichereinrichtung mit der Leseeinrichtung und/oder der Eingabeeinheit verbunden ist.

Besonders geeignet ist die Erfindung für den Verkauf von häufig benötigten Waren, wie etwa Lebensmitteln. Damit diese bei einem Aufbewahren in der erfindungsgemäßen Vorrichtung frisch gehalten werden und nicht der Gefahr eines Verderbens ausgesetzt sind, ist es von Vorteil, wenn die Vorrichtung eine Kühleinrichtung aufweist.

Weiters wird die oben genannte Aufgabe noch mit einem eingangs erwähnten Verfahren dadurch gelöst, dass erfindungsgemäß entsprechend einer Auswahl von Verkäuferseite reale Gegenstände in einer Schließvorrichtung angeordnet und verschlossen werden, und vor einem Entnehmvorgang durch einen Käufer von der Schließvorrichtung eine Authentifizierung des Käufers vorgenommen wird, wobei ein Öffnen der Schließvorrichtung erst nach erfolgreicher Authentifizierung des Käufers möglich ist.

Besonders vorteilhaft ist es dabei, wenn der zumindest eine Gegenstand von dem Käufer über einen elektronischen Kaufplatz, beispielsweise einen sogenannten "e-shop", der von einem Verkäufer auf einer WEB-Page angeboten wird, ausgewählt wird.

Weitere vorteilhafte Ausführungen des erfindungsgemäßen Verfahrens wurden bereits im Zusammenhang mit der Vorrichtung diskutiert.

Im folgenden ist die Erfindung an Hand der Zeichnung näher erläutert. In dieser zeigen
- Fig. 1: einen schematische Darstellung einer erfindungsgemäßen Vorrichtung,
- Fig. 2: ein Blockschaltbild einer erfindungsgemäßen Vorrichtung,
- Fig. 3: eine schematische Darstellung mehrerer mit einer Kontoeinrichtung verbundenen Vorrichtungen nach der Erfindung, und
- Fig. 4: eine erfindungsgemäße Vorrichtung mit einer externen Speichereinrichtung.

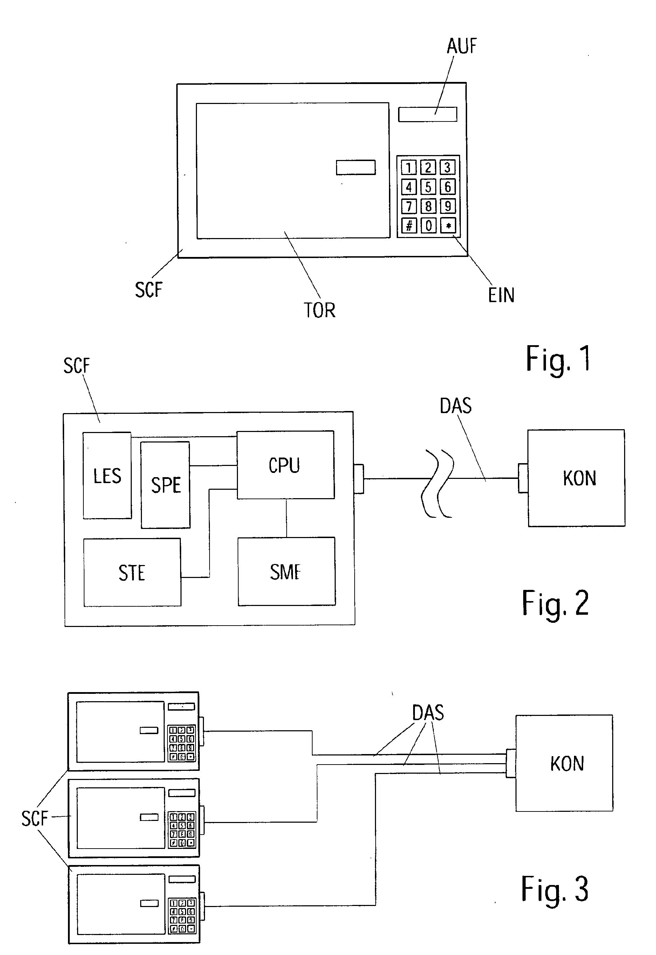

Die Figur 1 zeigt eine erfindungsgemäße Vorrichtung zum Verschließen von Gegenständen, welche im folgenden kurz als "Schließfach" SCF bezeichnet werden soll. Das Schließfach SCF besteht bei einer vorteilhaften Ausführungsform aus zumindest einem nicht dargestellten Innenraum, in dem Gegenstände aufbewahrt werden können, und zumindest einer Tür TOR zum Verschließen des Innenraums, sodass eine Entnahme von Gegenständen für nicht berechtigte Personen nicht möglich ist. Weiters weist in der gezeigten Darstellung das Schließfach SCF noch eine Eingabe EIN mit mehreren Tasten sowie eine Aufnahme AUF einer Leseeinrichtung für Speicherkarten auf.

Wie weiters aus der Figur 2 in einer schematischen Darstellung zu erkennen ist, weist das Schließfach SCF zumindest eine Recheneinheit CPU sowie zumindest einen Speicher SPE auf, die mit der Leseeinrichtung LES verbunden sind. Außerdem ist noch ein Schließmechanismus SME zu erkennen, der für das Öffnen der Tür zuständig ist und von der Recheneinheit CPU gesteuert ist.

Gemäß der Erfindung werden beispielsweise von einem Verkäufer Waren, etwa Speisen oder andere Gegenstände, z. B. elektronische Geräte, in dem Schließfach SCF verschlossen, die - wie später noch näher erläutert - von einem Käufer bei dem Verkäufer bestellt wurden. Weiters werden von Verkäuferseite bei dem Schließfach noch jene Daten eingegeben, deren Kenntnis für das Öffnen der Tür TOR und somit für ein Entnehmen der aufbewahrten Gegenstände notwendig ist. Üblicherweise sind diese Daten neben dem Verkäufer nur dem Käufer bekannt, bzw. nur der Käufer verfügt über die entsprechenden "Informationen", um sich gegenüber dem Schließfach SCF zu authentifizieren, d.h. sich als jene Person auszugeben, die berechtigt ist, die Gegenstände zu entnehmen.

Eine andere Möglichkeit besteht darin, dass der Verkäufer einem Schließfach SCF eine bekannte Nummer, beispielsweise eine Kundennummer, zuordnet, welche gleichsam als "Schlüssel" dient. Der Käufer kann dann zusammen mit seiner Kunden- oder EC-Karte und seiner Kundennummer dann eine eindeutige Authentifizierung durchführen (Public-Private-Key Verfahren).

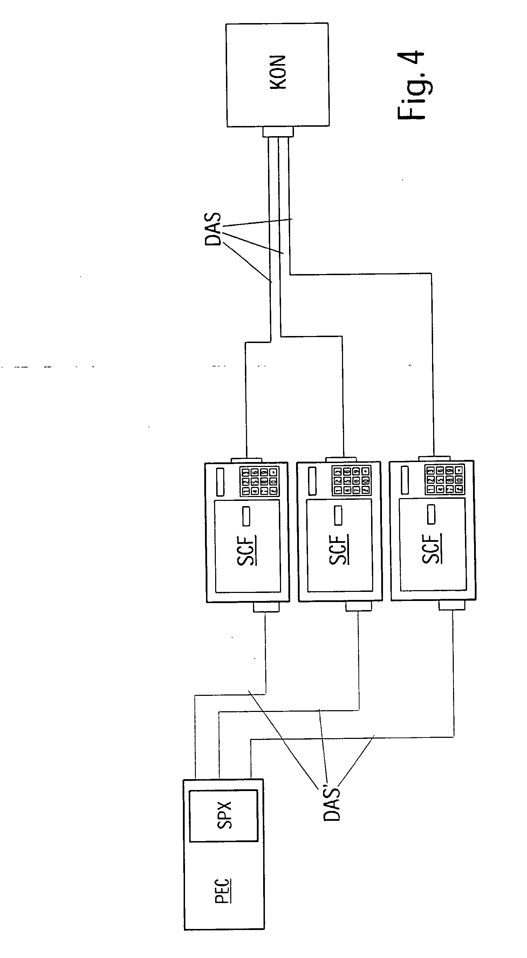

Diese Informationen werden bei der gemäß Fig. 2 gezeigten Ausführungsform der Erfindung in dem Speicher SPE des Schließfaches SCF abgelegt. Allerdings kann es auch vorgesehen sein, dass diese Daten in einem externen Speicher SPX, mit dem das Schließfach SCF über eine Datenleitung DAS' verbunden ist, abgelegt ist, wie dies in der Fig. 4 dargestellt ist.

Die Eingabe der oben angesprochenen Informationen, beispielsweise ein bestimmter Code, mit dem sich der Käufer gegenüber dem Schließfach SCF authentifizieren kann, kann etwa unmittelbar über die Eingabe EIN des Schließfaches SCF erfolgen, beispielsweise zu dem Zeitpunkt, zu dem das Schließfach SCF mit den jeweiligen Waren bestückt wird. Im Falle einer Datenverbindung von Verkäuferseite mit dem Schließfach SCF kann diese Eingabe aber auch komfortabel mit einem entsprechend an diese Datenleitung DAS' angebundenen Eingabegerät, beispielsweise einem Personalcomputer PEC, erfolgen, wie dies der Fig. 4 zu entnehmen ist. Dabei ist der externe Speicher SPX für die Zugangsberechtigungen in dem Eingabegerät PEC untergebracht. Es kann aber auch der Fall sein, dass der externe Speicher SPX in einem eigenen Gerät, etwa einem Datenserver abgelegt ist.

Diese "Eingabe von Informationen" kann auch so aussehen, dass einfach das Schließfach für einen oder mehrere Kaufvorgänge einem bestimmten Kunden, beispielsweise über seine Kundennummer bzw. Kundenkarte zugeordnet wird. Da diese Informationen oftmals in einer eigens dafür vorgesehenen Datenbank abgelegt sind, die für die Erfindung u.U. mit dem oder den Schließfächern,verknüpft werden kann, kann dann die Zuordnung für den Verkäufer besonders komfortabel erfolgen, da der mit dieser Vorgangsweise verbundene Aufwand sehr gering ist.

Insbesondere ist es in dem Fall, dass mehrere erfindungsgemäße Schließfächer SCF, wie beispielsweise in Fig. 4 dargestellt, verwendet werden, oftmals günstig, die Benutzerberechtigungen ("Informationen") mit einem zentralen Eingabemittel, wie eben beispielsweise einem Personalcomputer PEC, einzugeben. Besonders zweckmäßig kann es in diesem Fall insbesondere sein, wenn wie oben beschrieben für die Zugangsberechtigungen zu den einzelnen Schließfächern die Zugangsberechtigungen für die einzelnen Käufer in einem zentralen, externen Speicher SPX, der beispielsweise Bestandteil eines Computerservers oder des Personalcomputers PEC ist, abgelegt sind, wobei dies allerdings nicht unbedingt notwendig sein muss.

Zweckmäßig kann es aber auch sein, wenn einem bestimmten Schließfach SCF lediglich die Benutzerkennung von nur einer Person zugeordnet ist; insbesondere kann dies günstig sein, wenn ein bestimmtes Schließfach über einen längeren Zeitraum, etwa einem Stammkunden zugeordnet ist.

Wie des weiteren aus den Figuren 2 und 3 zu erkennen ist, ist dem erfindungsgemäßen Schließfach SCF zumindest eine Kontoeinrichtung KON zugeordnet. Wesentlicher Bestandteil der Erfindung ist, dass im wesentlichen gleichzeitig mit dem Öffnen des Schließfaches - praktisch dem Zeitpunkt der "Übergabe" der Waren - dem Verkäufer der Waren ein dem Warenwert entsprechendes Guthaben zu Lasten des Käufers gutgeschrieben wird. Insbesondere bei einer großen Anzahl von Schließfächern SCF ist es dabei von Vorteil - wenn nicht jedes Schließfach einem bestimmten Käufer zugeordnet ist -, die Zugangsinformationen in einem zentralen Speicher SPX abzulegen, da dies für den Verkäufer eine vereinfachte Handhabung des Verkaufsprozesses darstellt.

In dem gezeigten Beispiel ist die Kontoeinrichtung KON über eine Datenleitung DAS mit dem Schließfach SCF verbunden, was auch die Verwendung einer Kontoeinrichtung für mehrere Schließfächer möglich macht. Die Kontoeinrichtung kann grundsätzlich aber auch in eine Schließfach integriert sein.

Da die Erfindung insbesondere für verderbliche Waren, wie verschiedenste Speisen, von Interesse ist, kann es von Vorteil sein, wenn der Innenraum des Schließfaches SCF als Kühlraum ausgebildet ist, damit keine unmittelbare Gefahr des Verderbens der Waren besteht. Diese Ausgestaltung ist allerdings als zusätzliche vorteilhafte Ausbildung der Erfindung anzusehen, die nicht zwingend im Rahmen der Erfindung notwendig ist.

Hinsichtlich der Authentifizierung eines Käufers gegenüber einem Schließfach SCF gibt es verschiedene im folgenden beschriebene Möglichkeiten. Wichtig ist dabei, dass bei einer größeren Anzahl von Schließfächern der Käufer weiß, in welchem die für ihn bestimmten Waren untergebracht sind, und dass es nur ihm oder einer von ihm autorisierten Person möglich ist, dieses Schließfach zu öffnen. Die folgenden Möglichkeiten der Authentifizierung stehen nun zur Verfügung:
- Im Rahmen der Bestellung und gegebenenfalls Auftragsbestätigung wird dem Käufer ein Code, bestehend beispielsweise aus einer Zahlen- und/oder Buchstabenkombination mitgeteilt, die dieser an dem entsprechenden Schließfach eingibt. Bei einer Übermittlung des Codes beispielsweise per e-mail oder über eine Internet-Seite ist es günstig, wenn die Übertragung des Codes verschlüsselt erfolgt.
- Der Käufer verfügt über eine Kundenkarte, mit der er sich gegenüber dem Schließfach authentifiziert. Dazu wird die Kundenkarte in die Aufnahme des Lesegerätes des Schließfaches eingeschoben. Die Kundenkarte wird von dem Verkäufer bzw. einer damit beauftragten Ausgabestelle erzeugt und ausgegeben. Bei der Kundenkarte kann es sich beispielsweise um eine Speicherkarte, wie etwa in Form einer bekannten Bankomat- bzw. EC-Karte handeln. Gegen eine missbräuchliche Verwendung kann die Kundenkarte mit einem PIN-Code gesichert sein. In der Speichereinrichtung SPE, SPX, die dem Schließfach SCF zugeordnet ist, wird die Information abgelegt, welcher Kundenkarte das Schließfach bzw. der Inhalt des Schließfaches zugeordnet ist. Bei mehreren Schließfächern genügt hier eine Eingabe- bzw. Leseeinheit für alle Schließfächer da, sich automatisch das der Kundenkarte zugeordnete Schließfach öffnet.
- Bei einer Kontoeinrichtung im Sinne einer Bankomatkassa, bei der eine Bezahlung des Käufers mit seiner Bankomatkarte erfolgt, kann die Authentifizierung auch mittels der Bankomatkarte (EC-Karte) erfolgen, da hier eine Eingabe eines PIN-Codes der Karte notwendig ist.
- Die Authentifizierung kann auch mittels biometrischer Systeme, etwa durch eine Fingerabdruckeingabe, Irisscan etc. erfolgen. Die entsprechenden "Informationen" müssen in einer Datenbank in dem Speicher SPE, SPX des Schließfaches SCF abgelegt.
- Schließlich ist eine Authentifizierung auch noch unter Verwendung eines Mobilfunkgerätes, d. h. mit der SIM-Karte ("Subscriber Identity Module") möglich, mit dem dann auch gleich noch die Bezahlung erfolgen kann.

Zur Bezahlung der Waren, die in dem Schließfach abgelegt sind, sind ebenfalls mehrere verschiedene Möglichkeiten wie im folgenden angeführt möglich:
- Die Bezahlung kann beispielsweise mit einer Bankomatkarte - unabhängig davon ob dies zur Authentifizierung verwendet wird oder nicht - erfolgen, welche in die Aufnahme des Lesegerätes des Schließfaches eingeschoben wird. Gemäß der herkömmlichen Verwendung einer Bankomatkarte wird dabei das Konto des Käufers mit einem dem Wert der Waren entsprechenden Gegenwert belastet und dieser Wert einer Kontoeinrichtung des Verkäufers gutgeschrieben. Bei dieser Kontoeinrichtung kann es sich um ein Konto des Verkäufers handeln, dass beispielsweise von seinem Bankinstitut geführt wird, zumeist handelt es sich dabei aber - wie bei Bankomatkassen üblich - um eine eigene Speicherkarte, welcher der jeweilige Wert gutgeschrieben wird. Von dem Verkäufer wird dann zu regelmäßigen Zeitpunkten - zumeist am Ende eines Tages - über entsprechende, bekannte Vorgänge das tatsächliche Gutschreiben des Guthabens auf sein Konto durchgeführt.
- Eine Bezahlung ist beispielsweise mittels einer Kundenkarte, die als Speicherkarte ausgebildet ist, und die elektronisch mit einem bestimmten Guthaben geladen ist, erfolgen. Das elektronische Aufladen dieser Kundenkarte kann beispielsweise direkt von Verkäuferseite erfolgen, wo man etwa vorab ein bestimmtes Guthaben erwirbt. Sehr ähnlich ist in diesem Zusammenhang auch die Verwendung einer Bankomat- bzw. EC-Karte, die elektronisch mit einem bestimmten Betrag aufgeladen ist. Bei der Bezahlung kann ein solches elektronisches Guthaben dem Verkäufer gutgeschrieben werden, dass dieser zu einem späteren Zeitpunkt in "richtiges" Geld umtauschen kann. Die Aufladung einer Bankomatkarte kann an jedem beliebigen Bankomaten erfolgen oder direkt bei dem Händler.
- Weiters ist auch noch eine Bezahlung mittels eines Mobilfunkgerätes möglich, der Käufer wird über seine (monatliche) Telefonrechnung mit dem entsprechenden Wert der gekauften Waren belastet. Dazu ist es dann notwendig, dass die Schließvorrichtung SCF über Mittel zum Datenaustausch mit Mobilfunkgeräten verfügt, d. h. insbesondere eine Sende/Empfangseinrichtung, aufweisen. Die Authentifizierung erfolgt in diesem Fall vorteilhafterweise ebenfalls - wie oben bereits angesprochen - mit dem Mobilfunkgerät.
- Eine weitere Möglichkeit zur Bezahlung besteht auch in einem laufenden Konto des Käufers bei dem Verkäufer, von dem nach einer Authentifizierung bei einer Entnahme der Waren ein entsprechender Betrag abgebucht wird. Ein Öffnen des Schließfaches ist nur dann möglich, wenn das Konto gedeckt ist.
- Eine Bezahlung ist auch noch mit einer sogenannten "Prepaid"-Karte, wie diese beispielsweise aus dem Mobilfunkbereich bekannt sind, möglich. Dieser Karte ist ein bestimmtes Guthaben zugeordnet, welches u.U. wieder aufgeladen werden kann, und von dieser Prepaid-Karte wird dann bei einem Öffnen des Schließfaches der entsprechende Betrag abgebucht und der Verkäuferseite, d.h. der Kontoeinrichtung des Verkäufers, gutgeschrieben.

Im folgenden soll noch kurz auf das erfindungsgemäße Verfahren an Hand eines Beispiels kurz eingegangen werden. Ein Käufer bestellt bei einem Verkäufer in einem ersten Schritt ein oder mehrere Waren, die er zuvor ausgewählt hat. Die Auswahl erfolgt dabei beispielsweise aus einem Katalog, besonders vorteilhaft ist im Zusammenhang mit der Erfindung die Auswahl der Waren über das Internet, etwa über einen "elektronischen Shop" eines Anbieters, über den dann auch gleich die Bestellung der Waren erfolgt.

Bei der Bestellung der Waren über einen solchen "elektronischen Shop" werden die Waren auf einer entsprechenden Internet-Seite des Verkäufers in einen sogenannten "Warenkorb" mittels geeigneter Eingabeaktionen auf der Internetseite des Anbieters gelegt. Mit einer Bestätigungsaktion, beispielsweise durch Drücken eines "OK"-Buttons, erfolgt dann die Bestellung der in den Warenkorb gelegten Gegenstände. Andere Möglichkeiten der Bestellung bestehen natürlich auch in einer telefonischen Bestellung oder in einer Bestellung per Telefon, e-mail, unter Verwendung von WAP ("Wireless Application Protocol") oder SMS ("Short Message Service"). Weiters ist auch noch eine Bestellung über einen Katalog oder über Handheld-Computer (auch PDA's, wie etwa von Psion oder Palm) denkbar. In letzterem Fall könnte die Bestellung über einen Synchronisation des Handhelds mit einem Personalcomputer, der über einen aktiven Internetzugang verfügt, erfolgen. Die Bestellung könnte aber auch über ein Mobilfunkgeräte, das beispielsweise mit dem Handheld über eine Infrarot-Schnittstelle (oder Funk, Drahtschnittstelle, etc.) kommuniziert, oder eine direkte Anbindung des Handhelds an das Internet oder allgemeiner eine entsprechende Datenleitung erfolgen.

Neben der Angabe der gewünschten Waren ist es im Rahmen der Bestellung weiters notwendig, die Identität des Käufers dem Verkäufer mitzuteilen, damit dieser die bestellten Waren entsprechend zuordnen kann. Dazu kann der Käufer beispielsweise seinen Namen, eventuell mit Anschrift oder andere Informationen, beispielsweise seine e-mail-Adresse, beifügen. Bei häufiger Bestellungstätigkeit erweist es sich aber als günstig, wenn ein Käufer über eine eigene Kundennummer verfügt, über welche die Bestellung erfolgt.

Nachdem die Bestellung bei dem Verkäufer eingegangen ist, werden die Waren entsprechend der im Rahmen der Bestellung angegebenen Waren zusammengestellt. Falls bestimmte Waren nicht verfügbar sind, kann von Verkäuferseite dem Käufer ein Alternativangebot - z. B. mittels e-mail oder SMS - gemacht werden, das dieser annehmen oder etwa durch Nichtäußerung ablehnen kann. Die zusammengestellten Waren werden anschließend von Verkäuferseite in dem Schließfach SCF, wie es oben eingehend beschrieben ist, untergebracht und das Schließfach SCF, welches grundsätzlich ja einer großen Anzahl von Personen zugänglich ist, wird verschlossen, sodass ein Öffnen nur einer dazu autorisierten Person(engruppe) möglich ist. Üblicherweise wird die Bestellung dem Käufer bestätigt, und gleichzeitig wird dem bei mehreren vorhandenen Schließfächern SCF dem Käufer mitgeteilt, in welchem der Fächer seine Waren aufbewahrt sind.

Zu einem für den Käufer günstigen Zeitpunkt kann dieser die Waren bei dem für ihn bestimmten Schließfach SCF abholen. Er authentifiziert sich gegenüber dem Schließfach beispielsweise durch einen ihm vorher mitgeteilten Code oder durch Einschieben seiner Kundenkarte in die Aufnahme AUF des Schließfaches handelt. Falls der eingegebene Code richtig ist bzw. die Kundenkarte beim richtigen Schließfach eingeschoben wurde, ist lediglich noch die Bezahlung notwendig. Diese kann auf verschiedene oben beschriebene Arten erfolgen, beispielsweise mit der Kundenkarte (oder Bankomat- bzw. EC-Karte), mit der auch die Authentifizierung stattgefunden hat. Nachdem diese Bezahlung erfolgt ist, kann das Schließfach geöffnet werden und die darin befindlichen Waten können entnommen werden bzw. die Bezahlung erfolgt in dem Moment, in dem das Schließfach geöffnet wird.

Abschließend sei hier noch folgendes vermerkt: Die Art der Bestellung ist bei der vorliegenden Erfindung grundsätzlich zweitrangig, von besonderem Vorteil ist die Erfindung allerdings im Zusammenhang mit sogenannten "e-shops", also der Bestellung von Waren über das Internet. Was die Bezahlung betrifft, so muss nicht unbedingt die Bezahlung an sich in dem Moment des Öffnens des Schließfaches bzw. unmittelbar vorher erfolgen, sondern es muss nur ein dem Warenwert entsprechendes Guthaben dem Verkäufer gutgeschrieben werden.

Außerdem sei hier noch angeführt, dass zwar in den Zeichnungen Schließfächer SCF mit eigenen Eingaben EIN und eigenen Lesegeräten dargestellt sind, dass aber in der Praxis auch nur eine zentrale Eingabe und auch nur ein zentrales Lesegerät für mehrere Schließfächer vorgesehen sein kann.

Abschließend sei noch angemerkt, dass "gutschreiben" im Rahmen der Beschreibung und der Ansprüche so zu verstehen ist, dass entweder tatsächlich eine Geld-Transaktion stattfindet, oder dass beispielsweise nur überprüft wird, ob das Konto gedeckt ist, und später eine Belastung des Kontos zu Gunsten des Verkäufers stattfindet.

## Patentansprüche

1. Vorrichtung zum verschließbaren Aufbewahren von Gegenständen,
**dadurch gekennzeichnet, dass**
• sie dazu eingerichtet ist, eine Überprüfung einer Öffnungsberechtigung durchzuführen,
• dass sie weiters dazu eingerichtet ist, ein Öffnen nur nach erfolgter, positiver Authentifizierung eines Benutzers zu ermöglichen, und
• dass ihr eine Kontoeinrichtung (KON) zugeordnet ist, welcher zumindest ein Guthaben entsprechend dem Wert der aufbewahrten Gegenstände gutschreibbar ist.

2. Vorrichtung nach Anspruch 1,
**dadurch gekennzeichnet, dass** ein Öffnen erst nach einem Gutschreiben des Guthabens möglich ist bzw. dass sie dazu eingerichtet ist, das Guthaben im Moment des Öffnens gutzuschreiben.

3. Vorrichtung nach Anspruch 1 oder 2,
**dadurch gekennzeichnet, dass** die Kontoeinrichtung (KON) getrennt von der Vorrichtung (SCF) ausgebildet und mit dieser über eine Datenleitung (DAS) verbunden ist.

4. Vorrichtung nach einem der Ansprüche 1 bis 3,
**dadurch gekennzeichnet, dass** die Kontoeinrichtung (KON) zumindest eine Händler-Speicherkarte enthält, welcher das Guthaben gutgeschrieben wird, bzw. dass die Kontoeinrichtung im wesentlichen eine Händler-Speicherkarte ist.

5. Vorrichtung nach einem der Ansprüche 1 bis 4,
**dadurch gekennzeichnet, dass** sie zumindest eine Leseeinrichtung (LES) für Kunden-Speicherkarten aufweist.

6. Vorrichtung nach Anspruch 5,
**dadurch gekennzeichnet, dass** die Leseeinrichtung (LES) mit der Kontoeinrichtung (KON) verbindbar ist, und das Gutschreiben des Warenwertes unter Verwendung der Speicherkarte erfolgt.

7. Vorrichtung nach Anspruch 5 oder 6,
**dadurch gekennzeichnet, dass** eine Überprüfung der Öffnungsberechtigung an Hand der Speicherkarte erfolgt.

8. Vorrichtung nach einem der Ansprüche 1 bis 7,
**dadurch gekennzeichnet, dass** sie zumindest eine Eingabeeinheit (EIN) aufweist.

9. Vorrichtung nach Anspruch 7 und 8,
**dadurch gekennzeichnet, dass** sie dazu eingerichtet ist, eine über die Eingabeeinheit (EIN) eingegebene Kennung mit einer auf der Speicherkarte abgespeicherten Kennung zu vergleichen.

10. Vorrichtung nach einem der Ansprüche 1 bis 9,
**dadurch gekennzeichnet, dass** ihr zumindest eine Speichereinrichtung (SPE) zugeordnet ist, in welcher Informationen hinsichtlich der Zugangsberechtigung von Benutzern ablegbar sind.

11. Vorrichtung nach einem der Ansprüche 8 bis 10,
**dadurch gekennzeichnet, dass** die Speichereinrichtung (SPE) mit der Leseeinrichtung (LES) und/oder der Eingabeeinheit (EIN) verbunden ist.

12. Vorrichtung nach einem der Ansprüche 1 bis 11,
**dadurch gekennzeichnet, dass** sie eine Kühleinrichtung aufweist.

13. Verfahren zum Kaufen von Gegenständen,
**dadurch gekennzeichnet, dass**
entsprechend einer Auswahl von Verkäuferseite reale Gegenstände in einer Schließvorrichtung (SCF) angeordnet und verschlossen werden, und vor einem Entnehmvorgang durch einen Käufer von der Schließvorrichtung (SCF) eine Authentifizierung des Käufers vorgenommen wird, wobei ein Öffnen der Schließvorrichtung (SCF) erst nach erfolgreicher Authentifizierung des Käufers möglich ist.

14. Verfahren nach Anspruch 13,
**dadurch gekennzeichnet, dass** der zumindest eine Gegenstand von dem Käufer über einen elektronischen Kaufplatz ausgewählt wird.

15. Verfahren nach Anspruch 13 oder 14,
**dadurch gekennzeichnet, dass** beim oder unmittelbar nach dem Öffnen der Schließvorrichtung (SCF) ein den Gegenständen entsprechender Wert einer der Schließvorrichtung (SCF) zugeordneten Kontoeinrichtung (KON) gutgeschrieben wird.

16. Verfahren nach einem der Ansprüche 13 bis 15,
**dadurch gekennzeichnet, dass** ein Öffnen erst nach einem Gutschreiben des Guthabens möglich ist bzw. dass sie dazu eingerichtet ist, den Wert im Moment des Öffnens gutzuschreiben.

17. Verfahren nach einem der Ansprüche 13 bis 16,
**dadurch gekennzeichnet, dass** eine Kontoeinrichtung (KON) verwendet wird, welche getrennt von der Schließvorrichtung (SCF) ausgebildet und mit dieser über eine Datenleitung (DAS) verbunden ist.

18. Verfahren nach einem der Ansprüche 13 bis 17,
**dadurch gekennzeichnet, dass** das Guthaben einer Händler-Speicherkarte gutgeschrieben wird, welche in der Kontoeinrichtung (KON) enthalten ist, bzw. dass eine im wesentlichen als Händler-Speicherkarte ausgebildete Kontoeinrichtung verwendet wird.

19. Verfahren nach einem der Ansprüche 13 bis 18,
**dadurch gekennzeichnet, dass** eine Schließvorrichtung (SCF) mit zumindest einer Leseeinrichtung (LES) für Kunden-Speicherkarten verwendet wird.

20. Verfahren nach Anspruch 19,
**dadurch gekennzeichnet, dass** die Leseeinrichtung (LES) mit der Kontoeinrichtung (KON) verbindbar ist, und der Warenwert unter Verwendung der Speicherkarte gutgeschrieben wird.

21. Verfahren nach Anspruch 19 oder 20,
**dadurch gekennzeichnet, dass** die Öffnungsberechtigung an Hand der Speicherkarte durchgeführt wird.

22. Verfahren nach einem der Ansprüche 13 bis 21,
**dadurch gekennzeichnet, dass** eine Schließvorrichtung (SCF) verwendet wird, welche zumindest eine Eingabeeinheit (EIN) aufweist, wobei eine über die Eingabeeinheit (EIN) eingegebene Kennung mit einer auf der Speicherkarte abgespeicherten Kennung verglichen wird.

23. Verfahren nach einem der Ansprüche 13 bis 22,
**dadurch gekennzeichnet, dass** eine Schließvorrichtung (SCF) mit einer Speichereinrichtung (SPE) verwendet wird, in welcher Informationen hinsichtlich der Zugangsberechtigung von Benutzern ablegbar sind.

24. Verfahren nach Anspruch 23,
**dadurch gekennzeichnet, dass** die Speichereinrichtung (SPE) mit der Leseeinrichtung (LES) und/oder der Eingabeeinheit (EIN) verbunden ist.
